# EUROPÄISCHE PATENTSCHRIFT

(11) **EP 1 861 638 B1**
(45) Veröffentlichungstag und Bekanntmachung des Hinweises auf die Patenterteilung: **29.08.2012**
(21) Anmeldenummer: 06722583.9
(22) Anmeldetag: 09.03.2006
(51) Int. Cl.: F16H 61/12, F16H 61/28, F16H 63/36

(54) **VERFAHREN ZUM STEUERN EINES SCHALTVORGANGS IN EINEM SCHALTGETRIEBE MIT ACTIVE INTERLOCK**
METHOD FOR CONTROLLING A GEAR-SHIFTING PROCESS IN A MANUAL TRANSMISSION WITH ACTIVE INTERLOCK
PROCEDE DE COMMANDE D'UN PROCESSUS DE PASSAGE DE RAPPORTS DANS UNE BOITE DE VITESSES A VERROUILLAGE ACTIF

(30) Priorität: 16.03.2005 DE 102005012032
(43) Veröffentlichungstag der Anmeldung: 05.12.2007
(73) Patentinhaber: Schaeffler Technologies AG & Co. KG, 91074 Herzogenaurach (DE)
(72) Erfinder: WAERP, Ole, Jonny, N-3610 Kongsberg (NO); NORUM, Viggo, L., N-3612 Kongsberg (NO); ROYLAND, Jan, Gunnar, N-3610 Kongsberg (NO); LEIN, Lars, N-3613 Kongsberg (NO); SVENKERUD, Christer, N-3611 Kongsberg (NO)
(86) Internationale Anmeldenummer: PCT/DE2006/000426
(87) Internationale Veröffentlichungsnummer: WO 2006/097073

(56) Entgegenhaltungen:
- WO-A-03/087635
- DE-A1- 10 310 831
- DE-A1- 10 316 444

## Beschreibung

Die Erfindung betrifft ein Verfahren zum Steuern eines Schaltvorgangs von einem Ausgangsgang in einen Zielgang für ein Schaltgetriebe, das eine so genannte Active Interlock Schaltaktorik aufweist.

Bei einem gewöhnlichen Schaltgetriebe, einem manuellen Schaltgetriebe oder einem automatisierten Schaltgetriebe, laufen die Aktionen "Gang auslegen", "Wählen" und "Gang einlegen" in dieser festgelegten Reihenfolge ab. Bei einem Getriebe, das eine Active Interlock Schaltaktorik aufweist, werden die Funktionen des Gangauslegens und des Gangeinlegens durch unterschiedliche konstruktive Bauteile bewerkstelligt, insbesondere das Einlegen durch Schaltfinger, die ausschließlich für das Einlegen der Gänge zuständig sind. Das Auslegen wird durch Auslegegeometrien bewirkt, die ihrerseits einen Auslegefinger und einen Auslegenocken enthalten, die je nach Art des Schaltvorgangs die Schaltstange bewegen. Einlegegeometrie, d.h. Schaltfinger, und Auslegegeometrie sind getrennte Bauteile, so dass die Wählbewegung für den Zielgang vor der Auslegebewegung des Ausgangsgangs vorgenommen werden kann.

Somit kann bei einer Active Interlock Schaltaktorik, wie bekannt aus DE 10310831 A, DE 10316444 A oder WO 03/007635 A, der Schaltfinger bei eingelegtem Gang in die Mittelposition zurückbewegt werden, ohne den bisherigen Ausgangsgang auszulegen. Dadurch kann der neue Gang gewählt werden, ehe der alte Gang ausgelegt wird. In allen Schaltgassen, in denen der Schaltfinger nicht positioniert ist, wirkt eine Auslegegeometrie zum Auslegen des Ausgangsgangs. Sie legt den Ausgangsgang aus, unmittelbare ehe ein neuer Gang vom Schaltfinger eingelegt wird. Dabei sind Schaltfinger und Auslegegeometrie fest konstruktiv zugeordnet, so dass eine aktive Gangsperre dahingehend vorgesehen ist, dass ein Zielgang nicht eingelegt werden kann, ehe der Ausgangsgang ausgelegt ist.

Schaltsysteme mit Active Interlock weisen im Allgemeinen Fehlererkennungssysteme auf, welche eine Steuerung für ein automatisiertes Schaltgetriebe veranlasst, das Getriebe über Mechanismen, die vom erfassten Fehler nicht beeinträchtigt sind, in einen sicheren Zustand zu bringen, d.h. einen Zustand, der für den jeweiligen Fahrzustand keine Gefahr bietet und möglichst Getriebebeschädigungen vermeidet. Solche auftretenden Fehler können ein gebrochener oder ein beschädigter Schaltfinger, ein gebrochener oder beschädigter Auslegemechanismus, insbesondere ein gebrochener oder beschädigter Auslegenocken, oder andere meist mechanische Versagen an der Schaltaktorik sein. Außerdem können die Fehler sich auf Testfunktionen beziehen, die durchgeführt werden, um den sicher eingelegten Zustand eines Zielgangs oder die Rückkehr in die Ausgangsposition von Schaltaktorikelementen zu erfassen.

Problematisch können jedoch auch Zustände sein, in denen bereits ein Versagen an einem Element der Schaltaktorik beispielsweise aufgetreten ist, dieses jedoch von der Getriebesteuerung noch nicht erkannt ist, so dass ein Fehlerbehandlungsmodus der Getriebesteuerung noch nicht aktiviert ist und die Steuerung im Modus des fehlerfreien Betriebs trotz des vorliegenden Schadens arbeitet.

Daher ist es Aufgabe der vorliegenden Erfindung, ein Schaltverfahren für ein Schaltgetriebe mit Active Interlock vorzusehen, bei welchem sichergestellt ist, dass eine für die Fahrt und das Getriebe unkritische Schaltstellung aus dem Schaltvorgang resultiert, selbst wenn ein noch nicht erkannter Fehler oder Schaden an der Aktorik des Schaltgetriebes vorliegt.

Diese Aufgabe wird mit den Merkmalen des Anspruchs 1 gelöst.

Bevorzugte Ausführungsformen sind in den abhängigen Ansprüchen angegeben.

Ein Verfahren zum Steuern eines Schaltvorgangs von einem Ausgangsgang in einen Zielgang in einem Schaltgetriebe mit Active Interlock, bei dem die Active Interlock Schaltaktorik zumindest einen mit einer Schaltgabel zusammenwirkenden Schaltfinger und eine Auslegegeometrie mit einem Auslegefinger und einem Auslegenocken enthält, bringt die Schaltgabel des Ausgangsgangs mittels eines Schaltverfahrens, das einen Fehler an der Schaltaktorik kompensieren kann, in eine sichere Schaltstellung und/oder bringt die Schaltgabel des Zielgangs mittels eines Schaltverfahrens, das einen Fehler an der Schaltaktorik kompensiert, in eine sichere Schaltstellung, ehe der gewählte Zielgang eingelegt wird. Das Verfahren wird immer dann und vorzugsweise nur dann durchgeführt, wenn eine zeitunkritische Schaltung vorliegt.

Der Erfindung liegt der Gedanke zugrunde, sowohl die Auslegegeometrie als auch den Schaltfinger nicht direkt in den Zielgang zu führen, sondern zunächst einen sicheren Schaltzustand, d.h. einen Schaltzustand, der akzeptierbar ist, wenn er statt des eigentlich gewählten Gangs aufgrund eines Fehlers in der Schaltaktorik gewählt bleibt, zu bringen, ehe der eigentliche Zielgang eingelegt wird. Dadurch wird sichergestellt, dass das Getriebe in einem sicheren, vorhersehbaren Zustand und nicht in einem nicht vorhersehbaren Zustand ist, wenn ein noch nicht erkannter Fehler im Getriebe vorliegt. Ein noch nicht erkannter Fehler ist ein Fehler, den das Getriebesteuerungssystem noch nicht erfasst hat. Sobald der Fehler erfasst ist, ist nicht mehr die erfindungsgemäße Funktion für die Steuerung des Getriebes verantwortlich, sondern eine das Steuerungssystem aktivierte Fehlerbehandlung. Das vorliegende Verfahren stellt eine präventive Maßnahme für den Fall dar, in dem der Fehler noch nicht erkannt ist. Da die präventiven Maßnahmen, die ausgeführt werden, damit das Getriebe in einem sicheren Zustand endet, wenn ein noch nicht erkannter Fehler vorliegt, Zeit benötigen, die zusätzlich zu den normalen Schaltzeiten erforderlich ist, wird vor dem Verfahren gemäß der Erfindung bestimmt, ob ein zeitkritischer oder zeitunkritischer Schaltvorgang vorliegt. Nur für zeitunkritische Schaltvorgänge, d.h. solche, bei denen eine Verzögerung aufgrund der präventiven Maßnahmen keine Rolle spielt oder akzeptabel ist, werden mit den präventiven Schaltmaßnahmen durchgeführt.

Vorzugsweise ist der sichere Gang bzw. die sichere Getriebestellung die Neutralstellung.

Nach einer bevorzugten Ausführungsform wird der Zielgang durch Einlegen des Schaltfingers, der die Schaltgabel einrückt, erst eingelegt, wenn im sicheren Gang das fehlerfreie Erreichen des sicheren Gangs über ein Testverfahren erfasst und an die Getriebesteuerung zurückgemeldet ist.

Vorzugsweise werden Schaltvorgänge, die herabschalten, als zeitkritisch festgelegt, so dass das Verfahren in diesem Fall nicht durchgeführt wird.

Nach einer bevorzugten Ausführungsform gilt als zeitunkritische Schaltung eine Schaltung, bei der der Zielgang die Neutralstellung ist und/oder bei der der Ausgangs- oder der Zielgang ein Rückwärtsgang ist.

Vorzugsweise sind auch Schaltvorgänge von einem niedrigeren Ausgangsgang in einen höheren Zielgang, d.h. Hochschaltvorgänge, als zeitunkritisch festgelegt.

Nach einer bevorzugten Ausführungsform wird die einen gangeinrückende Schaltgabel in einen sicheren Gang gebracht, wenn der Zielgang "Neutral" ist, wobei der Auslegenocken verwendet wird, um die Schaltgabel in die Neutralposition zu bringen, der Auslegefinger verwendet wird, um die Schaltgabel in die Neutralposition zu bringen und der Schaltfinger verwendet wird, um die Schaltgabel in die Neutralposition zu bringen. Dadurch dass sowohl der Auslegenocken als auch der Auslegefinger verwendet werden, um die Schaltgabel des Ausgangsgangs in die Neutralposition zu bringen, erreicht die Schaltgabel die Neutralposition, selbst wenn ein Problem am Schaltfinger oder am Auslegenocken oder am Auslegefinger vorliegt. Dadurch, dass außerdem der Schaltfinger zusätzlich benutzt wird, um die Schaltgabel in die Neutralposition zu bringen, wird auch ein Problem, das den gesamten Auslegemechanismus betrifft, kompensiert.

Vorzugsweise wird, wenn der Zielgang an der gleichen Schaltgabel wie der Ausgangsgang ist, der Auslegenocken oder der Auslegefinger verwendet, um die Schaltgabel in die Neutralposition zu bringen und der Schaltfinger verwendet, um die Schaltgabel in den Zielgang zu bringen. Dadurch wird ein Problem am Schaltfinger kompensiert, da der Auslegemechanismus zum Bewegen der Schaltgabel in die Neutralposition verwendet wird. Dadurch, dass der Schaltfinger zum Bewegen der Schaltgabel in den Zielgang benutzt wird, bleibt der Schaltfinger in der sicheren Position, d.h. der Neutralposition, wenn der Schaltfinger beschädigt ist.

Nach einer bevorzugten Ausführungsform wird, wenn der Zielgang an einer anderen Schaltgabel als der Ausgangsgang ist, der Schaltfinger verwendet, um die Schaltgabel des Ausgangsgangs in die Neutralposition zu bringen und der Schaltfinger auch verwendet, um die Schaltgabel für den Zielgang in den Zielgang zu bringen. Wenn ein Problem am Auslegemechanismus vorliegt, wird dieses durch die Benutzung des Schaltfingers zum Bewegen der Schaltgabel in die Neutralposition kompensiert. Wenn ein fehlerhafter Schaltfinger vorliegt, bleibt der Gang in der Neutralposition, da der Schaltfinger benutzt wird, um die Schaltgabel in die Zielgangsposition zu bringen.

Vorzugsweise wird nach dem Einlegen des Zielgangs überprüft, ob der Zielgang korrekt eingelegt ist und bei einem Erkennen einer Abweichung dies der Getriebesteuerung zurück gemeldet.

Durch die beschriebenen Maßnahmen kann somit sichergestellt werden, dass die präventiven Sicherheitsfunktionen sicherzustellen, dass die Schaltgabel in einer sicheren Position (neutral) endet anstatt beispielsweise den Ausgangsgang eingerückt lässt oder in einem Zwischenzustand hängt, wenn ein noch nicht erkannter Fehler vorliegt.

Nachfolgend wird die Erfindung beispielhaft anhand eines Aktors für ein Parallelschaltgetriebe unter Verweis auf die beigefügten Figuren beschrieben, in denen:
- Figur 1: eine Active Interlock Aktor in perspektivischer Ansicht zeigt;
- Figur 2: einen Active Interlock Aktor für ein Parallelschaltgetriebe mit einem Schaltfinger und zwei Auslegegeometrien zeigt, wobei mit einer Active Interlock Aktorik beide Teilgetriebe eines Parallelschaltgetriebes bedient werden;
- Figur 3: ein Flussdiagramm ist, das den Verfahrensablauf beispielhaft für den Vorgang zeigt, in dem die Getriebewelle in Neutralposition zu bringen ist;
- Figur 4: ein Flussdiagramm für den Verfahrensablauf ist, in dem ein Zielgang aus einem Ausgangsgang einzulegen ist, wenn die Schaltgabel für den Zielgang und den Ausgangsgang die selbe ist; und
- Figur 5: ein Flussdiagramm ist, das den Verfahrensablauf beispielhaft zeigt, wenn der Zielgang und der Ausgangsgang nicht an der gleichen Schaltgabel sind.

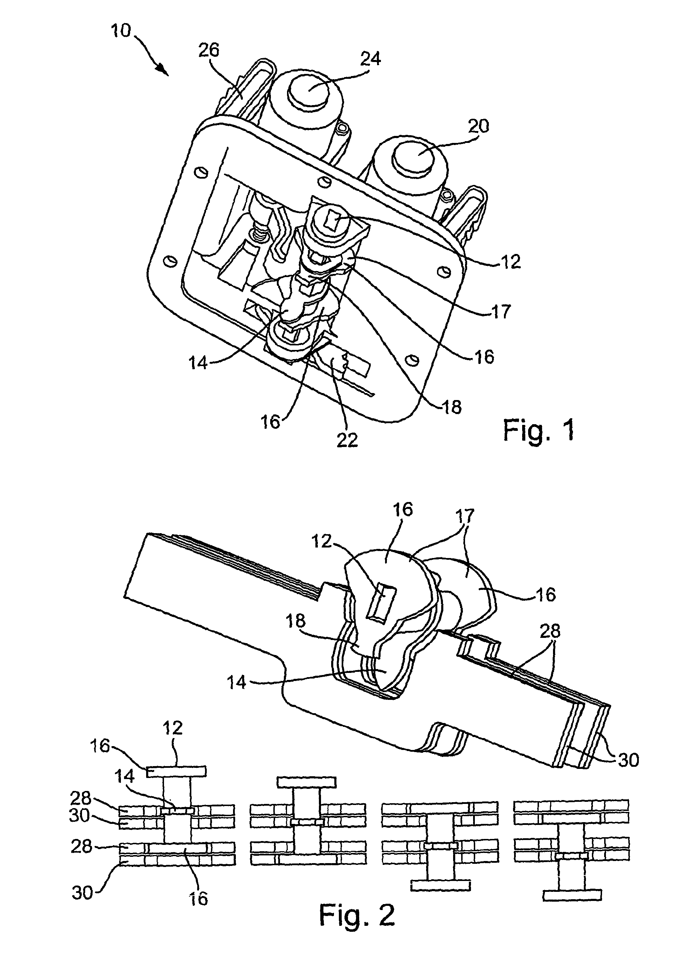

Figur 1 zeigt einen Active Interlock Aktor 10, wie er beispielsweise bei Fahrzeugen mit Heckantrieb zur Anwendung kommt. Die zentrale Schaltwelle 12 besitzt für die dargestellte Anwendung einen Schaltfinger 14 und zwei Auslegegeometrien 16. Die Auslegegeometrien 16 weisen jeweils einen nockenartigen Bereich 17 und einen fingerartigen Bereich 18 auf. Der Schaltfinger 14 sowie die Auslegegeometrien 16 sind auf der Schaltwelle 12 beweglich angeordnet und werden beim Wählen auf der rechteckigen Schaltwelle 12 verschoben. Ein Motor, z.B. ein bürstenloser Motor 20 treibt über einen Getriebemechanismus und beispielsweise ein Zahnsegment 22 die Schaltwelle 12. Ein weiterer Motor, beispielsweise ebenfalls ein bürstenloser Motor 24 ist vorgesehen, der als Wählmotor dient und eine Spindel antreibt, die die Schaltfinger 14 und Auslegegeometrien 16 verschiebt.

In Figur 2 sind schematisch die Schalt- und Wählvorgänge mittels eines Schaltfingers und zweier auf einer gemeinsamen Schaltwelle 12 angeordneter Auslegegeometrien 16 gezeigt. Der Schaltfinger 14 liegt zwischen den zwei Auslegegeometrien 16, die in einem Abstand entsprechend einer Gassenbreite angebracht sind. Schaltschienen 28, 30, die durch die Schaltfinger bzw. Auslegegeometrien verschoben werden, sind vorgesehen, wobei jeweils zwei Schaltschienen eine Ganggruppe bilden, für gerade Gänge bzw. für ungerade Gänge. In jeder Position des Schaltfingers 14 wirkt eine Auslegegeometrie 16 auf die andere Schaltschiene der gleichen Gruppe. Die Schaltschienen 28 bilden eine Gruppe, die Schaltschienen 30 die andere Gruppe. Da durch Drehen der Schaltwelle 12 zur Bewegung der Schaltschiene 28, 30 mittels des Schaltfingers 14 zunächst auf Grund der geometrischen Anordnung bewirkt wird, dass die Auslegegeometrien 16 die ihnen zugeordneten Schaltschienen in eine Neutralposition bringen, ist sichergestellt, dass innerhalb jeder Gruppe immer nur ein Gang geschaltet ist. Bei einem Parallelschaltgetriebe können jedoch zeitgleich jeweils ein Gang der beiden Gruppen (ein gerader und ein ungerader Gang) geschaltet sein. Wird ein Gang einer Gruppe ein- oder ausgelegt, bleibt in der anderen Gruppe alles unverändert. Nach Bedarf können auch mehrere Schaltfinger 14 vorgesehen werden, beispielsweise wenn zwischen den Schaltschienen größere Abstände vorliegen.

In Figur 2 sind vier Schaltzustände gezeigt, wobei der Schaltfinger 14 jeweils auf eine andere Schaltschiene 28 oder 30 wirkt. Die Geometrie des Schaltfingers 14 bzw. der Auslegegeometrien 16 stellt sicher, dass die Schaltschiene, deren Gang ausgelegt werden soll, verschoben wird, ehe der einzulegende Gang, d.h. der Zielgang mittels des Schaltfingers 14 eingelegt wird. Je nach Betätigungsrichtung wirken unterschiedliche Abschnitte 17 bzw. 18 einer Auslegegeometrie auf die entsprechende Schaltschiene 28 bzw. 30 um die Schaltschienen in eine Neutralposition zu bewegen.

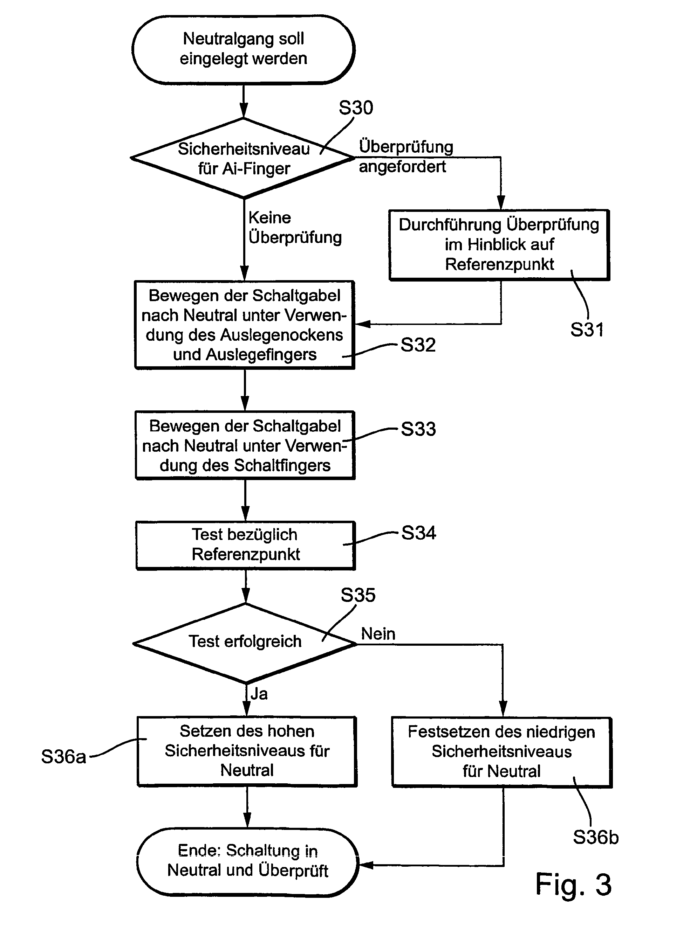

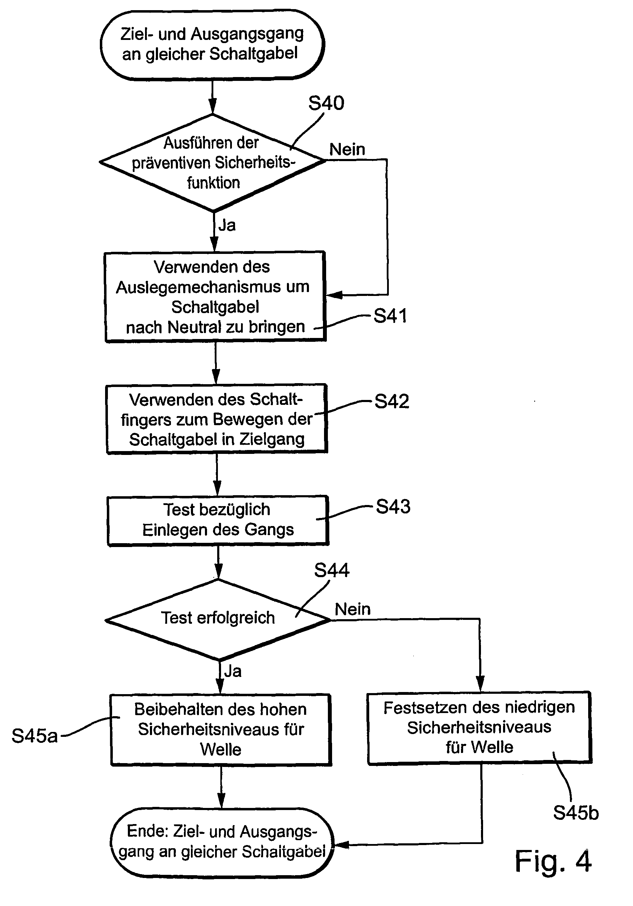

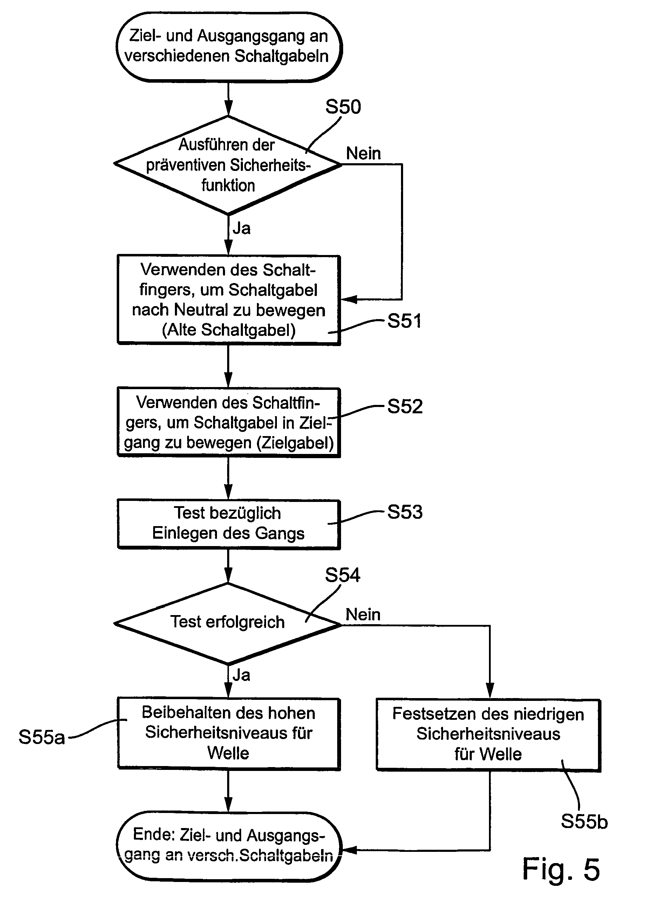

Nachfolgend wird anhand von Figuren 3 bis 5 das Verfahren zum Erreichen eines sicheren Getriebezustands unabhängig von einem etwaigen noch nicht erkannten Versagen in der Schaltaktorik eines Schaltgetriebes mit Active Interlock beschrieben. Dabei wird zur Steuerung der Auslegegeometrie und des Schaltfingers stets davon ausgegangen, dass in der Ausgangsposition der eingelegte Gang an der Welle bekannt ist und die Schaltgabel für den eingelegten Gang (Ausgangsgang) eingerückt ist. Figur 3 zeigt das Verfahren im Flussdiagramm, wenn die Neutralstellung die Zielstellung ist, Figur 4 das Verfahren, wenn der Ausgangsgang und der Zielgang mit der gleichen Schaltgabel eingerückt werden und Figur 5 den Fall, in dem der Zielgang und der Ausgangsgang mit verschiedenen Schaltgabein eingerückt werden.

Wenn die Zielstellung des Schaltvorgangs die Neutralstellung des Getriebes ist, erkennt eine Schaltungssteuerung dies und bestimmt, dass die präventiven Sicherheitsfunktionen im Schaltvorgang durchgeführt werden können, da ein Schaltvorgang in der Neutralstellung normalerweise nicht zeitkritisch ist, was bedeutet, dass der erhöhte Zeitaufwand, der für das Durchführen der präventiven Sicherheitsfunktionen erforderlich ist, akzeptabel ist. Andererseits ist, wenn der Zielgang die Neutralstellung ist, das Erreichen dieser Neutralstellung bezüglich der Sicherheit oftmals kritisch. Insbesondere ist am Antriebsstrang keinerlei Kraft akzeptabel, selbst für Vorgänge, in denen die Kupplung lediglich für Testzwecke in Eingriff gebracht wird. Daher erkennt die Schaltsteuerung, wenn die Neutralstellung die Zielstellung ist, vorzugsweise stets eine zeitunkritische Schaltung und führt die in Figur 3 dargestellten Schritte aus.

Zunächst wird in Schritt S30 festgelegt, ob es erforderlich ist, den Schaltfinger der Active Interlock Schaltaktorik im Hinblick auf seine Position zu testen. Dazu kann beispielsweise eine Inkrementalwegmessung für die Positionsbestimmung des Schaltfingers vorgenommen werden.

Wenn ein solcher Testvorgang erforderlich ist, wird dieser in Schritt S31 ausgeführt. Andernfalls, wenn die Position des Active Interlock Schaltfingers genau bekannt ist, geht das Verfahren auf Schritt S32 über, in dem die Schaltgabel des Ausgangsgangs in die Neutralstellung bewegt wird. Dazu wird die Auslegegeometrie verwendet, insbesondere werden sowohl der Auslegenocken als auch der Ausiegefinger verwendet, so dass bei einem Versagen oder einer Beschädigung von entweder dem Auslegenocken oder dem Auslegefinger das andere Element die Schaltgabel noch sicher in die Neutralstellung bewegen kann. Sollte der Schaltfinger beschädigt sein, so wird ebenfalls durch Schritt S32 die Schaltgabel sicher in die Neutralstellung gebracht, da der Schaltfinger nicht verwendet wird.

Anschließend wird in Schritt S33 nochmals ein Vorgang durchgeführt, in dem die Schaltgabel nach "Neutral" bewegt wird, wenn sie diesen Zustand noch nicht erreicht hat, da dort der Schaltfinger derart betätigt wird, dass er seinerseits die Schaltgabel nach "Neutral" bewegen würde. Sollte also in Schritt S32 die Auslegegeometrie versagt haben, erreicht die Schaltgabel dennoch sicher die Neutralposition. Somit werden drei unterschiedliche Mechanismen in Schritt S32 und Schritt S33 herangezogen, um die Schaltgabel aus dem Ausgangsgang in die Neutralstellung zu bewegen. Ein Versagen von einem oder sogar zwei der Mechanismen kann somit kompensiert werden und die Schaltgabel erreicht dennoch zuverlässig die Neutralstellung. Ein Versagen bzw. eine Beschädigung von sowohl der gesamten Auslegegeometrie als auch dem Schaltfinger gleichzeitig ist kaum wahrscheinlich, vor allem nicht insofern, als noch kein vorheriges Versagen in diesem Fall erkannt ist.

In Schritt S34 wird schließlich ein Test bezüglich des erreichten Referenzpunkts der Schaltgabel durchgeführt, um sicherzustellen, dass die Wähl- und Schaltposition gut, d.h. positionsgenau ist. Sollte die Neutralstellung nicht vollständig oder fehlerhaft erreicht sein, so wird dies in Schritt S34 erfasst. Dazu werden beispielsweise Positionsmessungen für den Wähl- und den Schaltvorgang, d.h. die zwei Richtungen, getrennt vorgenommen.

Wenn der Test aus Schritt S34 erfolgreich ist, wird in der Schaltsteuerung hinterlegt, dass die Neutralstellung zuverlässig erreicht ist und mit hoher Wahrscheinlichkeit kein Versagen in der Schaltaktorik vorliegt (Schritte S35, S36a). Andernfalls wird ein niedriges Sicherheitsniveau in Schritt S36b festgelegt und entsprechend ein Fehlermanagement vorgenommen.

Wenn ein Schaltvorgang durchgeführt werden soll, bei dem der Ziel- und Ausgangsgang an der gleichen Schaltgabel sind, d.h. mit der gleichen Schaltgabel eingerückt werden, wird ein Verfahren gemäß Figur 4 durchgeführt. Dabei wird in Schritt S40 zunächst bestimmt, ob die präventiven Sicherheitsfunktion durchgeführt werden soll oder nicht. Dabei gilt im Allgemeinen, dass bei einer Änderung der Fahrtrichtung (d.h. einer Schaltung zu oder aus dem Rückwärtsgang) normalerweise eine zeitunkritische Schaltung vorliegt, so dass in diesem Fall die Bestimmung in Schritt S40 derart ist, dass die präventive Sicherheitsfunktion durchzuführen ist. Schaltungen, bei denen der Zielgang und der Ausgangsgang an der gleichen Schaltgabel sind und keine Richtungsumkehr vorliegt, sind selten, wenn man beachtet, dass die Schaltung so aufgebaut ist, dass aufeinander folgende Gänge (z. B. erster Gang und dritter Gang) an unterschiedlichen Schaltgabeln liegen. Somit bezieht sich das in Figur 4 dargestellte Ablaufschema vor allem auf Richtungsumkehrschaltungen. Allerdings kann die Bestimmung in Schritt S40 auch dann "ja" sein, wenn sich das Fahrzeug bewegt aber die Schaltzeit nicht zeitkritisch ist, z. B. bei Hochschaltvorgängen (vom ersten in den fünften Gang), wobei gleichzeitig in diesem Fall nicht erkannte Fehler gravierender sind, da die Möglichkeit besteht, dass die Kupplung überdreht. Somit ist die Bestimmung in Schritt S40 vorzugsweise auch dann "ja", wenn Ziel und Ausgangsgang an der gleichen Schaltgabel anliegen und eine Hochschaltung vorgenommen wird.

Gewöhnlich rückt der Schaltfinger die Schaltgabel zum Lösen des alten Gangs und zum Einlegen des Zielgangs ein, wenn der Zielgang mit der gleichen Schaltgabel wie der Ausgangsgang einzurücken ist. Dies bedeutet, dass bei einem Versagen des Schaltfingers in diesem Fall die Welle im alten Gang bleibt, was sicherheitskritisch sein kann.

Daher wird, wenn in Schritt S40 festgelegt ist, dass die präventive Sicherheitsfunktion ausgeführt werden soll, der Auslegemechanismus des Active Interlock Aktoriksystems Verwendet, um die Schaltgabel nach "Neutral" zu bringen (Schritt S41). Dabei bildet "Neutral" die sichere Schaltstellung. Erst anschließend wird, wie es auch ohne präventive Sicherheitsmaßnahme geschieht, in Schritt S42 der Schaltfinger dazu verwendet, die Schaltgabel in den Zielgang einzurücken. Somit wird verhindert, dass bei einem fehlerhaften Schaltfinger der Ausgangsgang eingelegt bleibt. Wenn der Schaltfinger beschädigt ist, bleibt in diesem Fall in Schritt S42 die Schaltgabel in der Neutralposition, so dass kein fehlerhafter Gang eingelegt ist und die Schaltposition vorhersehbar bleibt.

Im anschließenden Schritt S43, S44 wird überprüft, ob der Zielgang korrekt eingelegt ist, und es wird festgestellt, wenn der Gang nicht richtig eingelegt ist, was gegebenenfalls wiederum zum Festlegen eines niedrigeren Sicherheitsniveaus und zum Anlass für eine Fehlerbehandlung in Schritt S45b führt. Andernfalls wird das hohe Vertrauensniveau, das in der Schaltungssteuerung gesetzt ist, beibehalten (Schritt S45a).

Wenn in Schritt S40 ein zeitkritischer Schaltvorgang (z.B. Herunterschaltvorgang) bestimmt wird, dann springt das Verfahren von Schritt S40 direkt auf Schritt S42.

Figur 5 zeigt schließlich den Fall, in dem der Ziel- und Ausgangsgang an verschiedenen Schaltgabeln liegen. Wiederum wird in Schritt S50 zunächst festgelegt, ob die präventive Sicherheitsfunktion durchzuführen ist oder nicht. Wenn das Fahrzeug im Stillstand ist, wird vorzugsweise die präventive Sicherheitsfunktion ausgeführt, da die Schaltzeit nicht zeitkritisch ist. Wenn andererseits sich das Fahrzeug bewegt, verhindert die entstehende Synchronisationskraft das Einlegen des Zielgangs, wenn der Auslegemechanismus versagt, so dass das Fehlermanagementsystem der Schaltsteuerung dies erkennt.

Soll gemäß der Bestimmung in Schritt S50 die präventive Sicherheitsfunktion durchgeführt werden, so wird in Schritt S51 der Schaltfinger dazu verwendet, um die Schaltgabel in die sichere Schaltstellung, das heißt die Neutralposition, zu bewegen. Somit kann verhindert werden, dass durch Verwendung des Schaltfingers zum Einrücken der Schaltgabel in den Zielgang gleichzeitig zwei Gänge eingelegt sind, sollte die Auslegegeometrie versagen. Nachdem der Schaltfinger dazu verwendet wurde, um die Schaltgabel nach "Neutral" zu bewegen, wird wie gewöhnlich in Schritt S52 der Schaltfinger dazu verwendet, um die neue Schaltgabel in den Zielgang zu bewegen. Anschließend wird wiederum, wie bereits im Zusammenhang mit Figur 4 erläutert, in Schritten S53 bis S55 eine Überprüfung des eingelegten Gangs vorgenommen.

Der wesentliche Aspekt der Erfindung liegt somit darin, dass bei zeitunkritischen Schaltvorgängen die herkömmliche Schalt- bzw. Aktionsabfolge im Active Interlock System durch einen Vorgang ergänzt wird, der ausgeführt wird, ehe der Zielgang eingerückt wird, in dem die Schaltgabel des Ausgangsgangs in eine sichere Schaltstellung, z. B. in die Neutralposition, gebracht wird. Dies geschieht vorzugsweise ebenfalls redundant. Somit wird sowohl bei einem Versagen der Auslegegeometrie als auch bei einem Versagen des Schaltfingers zum Einlegen des Zielgangs sichergestellt, dass das Getriebe in einem sicheren Zustand bleibt.

### Bezugszeichenliste

- 10: Active Interlock
- 12: zentrale Schaltwelle
- 14: Schaltfinger
- 16: Auslegegeometrie
- 17: nockenartiger Bereich
- 18: fingerartiger Bereich
- 20: bürstenloser Motor
- 22: Zahnsegment
- 24: bürstenloser Motor
- 26: Spindel
- 28: Schaltschiene
- 30: Schaltschiene

## Patentansprüche

1. Verfahren zum Steuern eines Schaltvorgangs von einem Ausgangsgang in einen Zielgang in einem Schaltgetriebe mit Active Interlock, wobei die Active Interlock Schaltaktorik zumindest einen mit einer Schaltgabel zusammenwirkenden Schaltfinger und eine Auslegegeometrie mit einem Auslegefinger und einem Auslegenöcken enthält, **dadurch gekennzeichnet dass** die Schaltgabel des Ausgangsgangs mittels eines Fehler an der Schaltaktorik kompensierenden Schaltverfahrens in eine sichere Schaltstellung gebracht wird und/oder die Schaltgabel des Zielgangs mittels eines Fehler an der Schaltaktorik kompensierenden Schaltverfahrens in eine sichere Schaltstellung gebracht wird; ehe der Zielgang eingelegt wird, wenn eine zeitunkritische Schaltung durchzuführen ist.

2. Verfahren nach Anspruch 1, **dadurch gekennzeichnet, dass** die sichere Schaltstellung die Neutral-Stellung ist.

3. Verfahren nach einem der vorhergehenden Ansprüche, **dadurch gekennzeichnet, dass** der Zielgang eingelegt wird, nachdem in der sicheren Schaltstellung das fehlerfreie Erreichen der sicheren Schaltstellung erfasst wurde.

4. Verfahren nach einem der vorhergehenden Ansprüche, **dadurch gekennzeichnet, dass** Herunterschaltvorgänge von einem höheren Ausgangsgang in einen niedrigeren Zielgang als zeitkritisch festgelegt sind.

5. Verfahren nach einem der vorhergehenden Ansprüche, **dadurch gekennzeichnet, dass** eine zeitunkritische Schaltung festgelegt wird, wenn der Zielgang die Neutral-Stellung ist und/oder der Ausgangs- oder der Zielgang ein Rückwärtsgang ist.

6. Verfahren nach einem der vorhergehenden Ansprüche, **dadurch gekennzeichnet, dass** Schaltvorgänge von einem niedrigeren Ausgangsgang in einen höheren Zielgang als zeitunkritisch festgelegt sind.

7. Verfahren nach einem der vorhergehenden Ansprüche, **dadurch gekennzeichnet, dass** der Schritt des die Schaltgabel in eine sichere Schaltstellung Bringens enthält, wenn der Zielgang Neutral ist: Verwenden des Auslegenockens, um Schaltgabel in die Neutralposition zu bringen; Verwenden des Auslegefingers, um Schaltgabel in die Neutralposition zu bringen; und Verwenden des Schaltfingers, um Schaltgabel in die Neutralposition zu bringen.

8. Verfahren nach einem der Ansprüche 1 bis 6, **dadurch gekennzeichnet, dass** der Schritt des die Schaltgabel in eine sichere Schaltstellung Bringens enthält, wenn der Zielgang an der gleichen Schaltgabel wie der Ausgangsgang ist: Verwenden des Auslegenockens oder des Auslegefingers, um die Schaltgabel in die Neutralposition zu bringen; und Verwenden des Schaltfingers, um die Schaltgabel in den Zielgang zu bringen.

9. Verfahren nach einem der Ansprüche 1 bis 6, **dadurch gekennzeichnet, dass** der Schritt des die Schaltgabel in eine sichere Schaltstellung Bringens enthält, wenn der Zielgang an einer anderen Schaltgabel als der Ausgangsgang ist: Verwenden des Schaltfingers, um die Schaltgabel des Ausgangsgangs in die Neutralposition zu bringen; und Verwenden des Schaltfingers, um die Schaltgabel für den Zielgang in den Zielgang zu bringen.

10. Verfahren nach einem der vorhergehenden Ansprüche, **dadurch gekennzeichnet, dass** nach dem Einlegen des Zielgangs eine Überprüfung vorgenommen wird, ob der Zielgang korrekt eingelegt ist.

## Claims

1. Method for controlling a shift process from a source gear into a target gear in a shift gearbox with active interlock, wherein the active interlock shift actuator arrangement comprises at least one shift finger, which interacts with a shift fork, and one disengagement geometry which has a disengagement finger and a disengagement cam, **characterized in that** the shift fork of the source gear is placed into a safe shift position by means of a shift process which compensates for a fault of the shift actuator arrangement, and/or the shift fork of the target gear is placed into a safe shift position by means of a shift process which compensates for a fault of the shift actuator arrangement; before the target gear is engaged if a non-time-critical shift is to be performed.

2. Method according to Claim 1, **characterized in that** the safe shift position is the neutral position.

3. Method according to one of the preceding claims, **characterized in that** the target gear is engaged after, in the safe shift position, fault-free attainment of the safe shift position has been detected.

4. Method according to one of the preceding claims, **characterized in that** downshift processes from a higher source gear into a lower target gear are defined as being time-critical.

5. Method according to one of the preceding claims, **characterized in that** a non-time-critical shift is defined if the target gear is the neutral position and/or the source or target gear is a reverse gear.

6. Method according to one of the preceding claims, **characterized in that** shift processes from a lower source gear into a higher target gear are defined as non-time-critical.

7. Method according to one of the preceding claims, **characterized in that** the step of placing the shift fork into a safe shift position comprises the following steps if the target gear is neutral: using the disengagement cam to place the shift fork into the neutral position; using the disengagement finger to place the shift fork into the neutral position; and using the shift finger to place the shift fork into the neutral position.

8. Method according to one of Claims 1 to 6, **characterized in that** the step of placing the shift fork into a safe shift position comprises the following steps if the target gear is on the same shift fork as the source gear: using the disengagement cam or the disengagement finger to place the shift fork into the neutral position; and using the shift finger to place the shift fork into the target gear.

9. Method according to one of Claims 1 to 6, **characterized in that** the step of placing the shift fork into a safe shift position comprises the following steps if the target gear is on a different shift fork than the source gear: using the shift finger to place the shift fork of the source gear into the neutral position; and using the shift finger to place the shift fork for the target gear into the target gear.

10. Method according to one of the preceding claims, **characterized in that**, after the engagement of the target gear, a check is performed with regard to whether the target gear is correctly engaged.

## Revendications

1. Procédé de commande d'une opération de commutation depuis un rapport de départ à un rapport cible dans une boîte de vitesses à verrouillage actif, le système de commande de commutation du verrouillage actif contenant au moins un doigt de commutation coopérant avec une fourchette de commutation et une géométrie de désenclenchement avec un doigt de désenclenchement et une came de désenclenchement, **caractérisé en ce que** la fourchette de commutation du rapport de départ est amenée dans une position de commutation sûre au moyen d'un procédé de commutation compensant des erreurs du système de commande de commutation et/ou la fourchette de commutation du rapport cible est amenée dans une position de commutation sûre au moyen d'un procédé de commutation compensant des erreurs du système de commande de commutation ; avant que le rapport cible ne soit enclenché, lorsqu'une commutation non dépendante du temps doit être effectuée.

2. Procédé selon la revendication 1, **caractérisé en ce que** la position de commutation sûre est la position neutre.

3. Procédé selon l'une quelconque des revendications précédentes, **caractérisé en ce que** le rapport cible est enclenché après que l'obtention sans erreur de la position de commutation sûre a été détectée dans la position de commutation sûre.

4. Procédé selon l'une quelconque des revendications précédentes, **caractérisé en ce que** des opérations de rétrogradage depuis un rapport de départ supérieur dans un rapport cible inférieur sont établies comme dépendantes du temps.

5. Procédé selon l'une quelconque des revendications précédentes, **caractérisé en ce qu'**une commutation non dépendante du temps est établie lorsque le rapport cible est la position neutre et/ou que le rapport de départ ou le rapport cible est un rapport de marche arrière.

6. Procédé selon l'une quelconque des revendications précédentes, **caractérisé en ce que** des opérations de commutation d'un rapport de départ inférieur à un rapport cible supérieur sont établies comme non dépendantes du temps.

7. Procédé selon l'une quelconque des revendications précédentes, **caractérisé en ce que** l'étape consistant à amener la fourchette de commutation dans une position de commutation sûre contient, lorsque le rapport cible est la position neutre : l'utilisation de la came de désenclenchement afin d'amener la fourchette de commutation dans la position neutre ; l'utilisation du doigt de désenclenchement afin d'amener la fourchette de commutation dans la position neutre ; et l'utilisation du doigt de commutation afin d'amener la fourchette de commutation dans la position neutre.

8. Procédé selon l'une quelconque des revendications 1 à 6, **caractérisé en ce que** l'étape consistant à amener la fourchette de commutation dans une position de commutation sûre contient, lorsque le rapport cible est sur la même fourchette de commutation que le rapport de départ : l'utilisation de la came de désenclenchement ou du doigt de désenclenchement pour amener la fourchette de commutation dans la position neutre ; et l'utilisation du doigt de commutation pour amener la fourchette de commutation dans le rapport cible.

9. Procédé selon l'une quelconque des revendications 1 à 6, **caractérisé en ce que** l'étape consistant à amener la fourchette de commutation dans une position de commutation sûre contient, lorsque le rapport cible est sur une autre fourchette de commutation que le rapport de départ : l'utilisation du doigt de commutation pour amener la fourchette de commutation du rapport de départ dans la position neutre ; et l'utilisation du doigt de commutation pour amener la fourchette de commutation pour le rapport cible dans le rapport cible.

10. Procédé selon l'une quelconque des revendications précédentes, **caractérisé en ce qu'**après l'enclenchement du rapport cible, on vérifie si le rapport cible a été enclenché correctement.
